# EUROPÄISCHE PATENTSCHRIFT

(11) **EP 2 285 617 B1**
(45) Veröffentlichungstag und Bekanntmachung des Hinweises auf die Patenterteilung: **09.10.2013**
(21) Anmeldenummer: 09765530.2
(22) Anmeldetag: 30.05.2009
(51) Int. Cl.: B60K 35/00

(54) **BEDIENEINRICHTUNG**
OPERATING DEVICE
DISPOSITIF DE COMMANDE

(30) Priorität: 18.06.2008 DE 102008028974
(43) Veröffentlichungstag der Anmeldung: 23.02.2011
(73) Patentinhaber: Bayerische Motoren Werke Aktiengesellschaft, 80809 München (DE)
(72) Erfinder: KUENZNER, Hermann, 85356 Freising (DE)
(74) Vertreter: Mayer-Martin, Christian
(86) Internationale Anmeldenummer: PCT/EP2009/003896
(87) Internationale Veröffentlichungsnummer: WO 2009/152950

(56) Entgegenhaltungen:
- EP-A- 1 110 795
- DE-A1- 10 230 854
- DE-A1- 10 346 112

## Beschreibung

Die Erfindung betrifft eine Bedieneinrichtung, insbesondere für ein Kraftfahrzeug oder für ein Kraftfahrzeugnavigationssystem.

Aktuelle Kraftfahrzeuge verfügen zunehmend über eine separat von einer Anzeigeeinrichtung gebildete Bedieneinheit im Bereich der Mittelkonsole. Eine solche Bedieneinheit ist beispielsweise aus der EP 0893750 B1 bekannt. Die Bedieneinheit verfügt dabei über ein bidirektional um seine Symmetrieachse drehbares Schaltglied, das zudem axial bewegbar (drückbar) und schwenkbar gelagert ist. Damit können durch ein Drehen, Drücken und/oder Schwenken des Schaltgliedes beispielsweise Menüpunkte auf einer Anzeigeeinrichtung markiert und ausgewählt werden oder Parameter eingestellt werden. Häufig wird ein solches Dreh-Drück-Element, das auf der Mittelkonsole des Kraftfahrzeuges angeordnet ist, um Schalter, insbesondere Wippschalter oder Tasten, ergänzt.

Es sind verschiedene Methoden bekannt, um von einem Menüpunkt zu einem anderen zu wechseln. Gängig sind beispielsweise Tasten, bei deren Betätigung zu einem bestimmten Menüpunkt gewechselt wird. Aus der DE 19962213 A1, die den nächstliegenden bekannten Stand der Technik darstellt, ist beispielsweise ein Verfahren zum Wechseln von einem Punkt innerhalb eines Auswahlmenüs zu einem anderen Punkt eines anderen Auswahlmenüs mit Hilfe eines Betätigungsgliedes bekannt. Dabei sind die Auswahlmenüs hierarchisch aus Menü, Teilmenüs, Funktion und/oder Funktionswert aufgebaut. Bei einem direkten Wechsel von einem Auswahlmenü zu einem anderen wird der zuletzt benutzte Menüpunkt der Auswahlmenüs gespeichert. Beim Übergang zum jeweiligen Auswahlmenü wird jeweils zu dem Menüpunkt gewechselt, der bei der vorangegangenen Benützung dieses Auswahlmenüs als letzter ausgewählt war. Wenn beispielsweise eine Taste mit "NAV" beschriftet ist, wird durch deren Betätigung in ein Navi-gationsmenü gewechselt. Innerhalb des Navigationsmenüs wird automatisch zu dem Menüpunkt oder zu der Menüebene gewechselt, die beim letzten Aufruf des Navigationsmenüs aktiv oder ausgewählt war. Im Beispiel des Navigationsmenüs könnte das beispielsweise einer der Menüpunkte "Kartendarstellung", "Zieleingabe" oder "Verkehrsmeldungen" sein.

Insbesondere unerfahrene Nutzer haben durch diesen automatischen, bewusst nicht beabsichtigten Wechsel in ein Untermenü möglicherweise Orientierungsprobleme innerhalb der Menüstruktur. Wenn ein Nutzer beispielsweise ein neues Navigationsziel eingeben will, wird er die "NAV"-Taste drücken. Möglicherweise gelangt er dann aber nicht in das Untermenü "Zieleingabe" sondern in das Untermenü "Kartendarstellung" oder "Verkehrsmeldungen", abhängig davon, welches Untermenü zuletzt - möglicherweise vom Vorbenutzer - angewählt war. Dies kann einen Nutzer verwirren und zu langen Bedienzeiten führen.

Der Erfindung liegt nun die Aufgabe zugrunde, eine gegenüber dem Stand der Technik verbesserte Bedieneinrichtung anzugeben.

Diese Aufgabe wird durch die Merkmale des unabhängigen Anspruchs gelöst. Vorteilhafte Weiterbildungen der Erfindung sind den abhängigen Ansprüchen zu entnehmen.

Die Erfindung basiert demnach auf dem Gedanken, gegebenenfalls bei einer ersten Durchführung einer Bedienhandlung automatisch zu einem Menüpunkt zu wechseln und bei einer wiederholten Durchführung derselben Bedienhandlung zu einem dem ausgewählten Menüpunkt übergeordneten Menüpunkt zu wechseln.

Eine erfindungsgemäße Bedieneinrichtung weist eine Bedieneinheit zur Erfassung von Bedienaktionen eines Nutzers und eine Anzeigeeinrichtung zum Anzeigen von Informationen, die jeweils einem Menüpunkt (oder einer Menüebene) einer Vielzahl von Menüpunkten (oder Menüebenen) einer hierarchischen Menüstruktur zugeordnet sind, auf. Eine Prozessoreinrichtung ist derart mit der Bedieneinheit und der Anzeigeeinrichtung gekoppelt, dass durch die Erfassung einer vorgegebenen Bedienaktion ein Wechsel von einem Menüpunkt (oder Menüebene) zu einem anderen Menüpunkt (oder Menüebene) ausgelöst wird, und dass durch eine, insbesondere darauf folgende, weitere Erfassung der vorgegebenen, insbesondere derselben, Bedienaktion ein Wechsel von dem Menüpunkt (oder der Menüebene) zu einem dem Menüpunkt (oder der Menüebene) in der hierarchischen Menüstruktur übergeordneten Menüpunkt (oder Menüebene) ausgelöst wird.

Ein Nutzer, der nach einem - durch eine Bedienaktion ausgelösten -Wechsel des Menüpunktes die Orientierung innerhalb einer hierarchischen Menüstruktur verloren hat oder mit dem nun ausgewählten Menüpunkt nicht zufrieden ist, wird mit großer Wahrscheinlichkeit intuitiv die selbe Bedienaktion noch einmal durchführen. Durch die Erfindung wird er durch diese intuitive Reaktion den Wechsel zu einem Menüpunkt auslösen, der mit großer Wahrscheinlichkeit eine verbesserte Orientierung innerhalb der Menüstruktur ermöglicht, oder der mit großer Wahrscheinlichkeit dem eigentlichen Nutzerwunsch näher kommt als der zunächst ausgewählte Menüpunkt. Dadurch wird die Bedienung erleichtert. Die Navigationswege innerhalb einer hierarchischen Menüebene werden verkürzt oder abgekürzt.

Bei einer bevorzugten Bedieneinrichtung weist die hierarchische Menüstruktur eine Vielzahl von Hauptmenüpunkten auf, denen jeweils eine Vielzahl von Untermenüpunkten zugeordnet ist. Durch die Erfassung einer vorgegebenen Bedienaktion wird ein Wechsel von einem ersten Menüpunkt, insbesondere Hauptmenüpunkt und/oder Untermenüpunkt, zu einem Untermenüpunkt, der insbesondere einem anderen Hauptmenüpunkt oder Hauptmenü als der erste Menüpunkt zugeordnet ist, ausgelöst. Durch eine, insbesondere darauf folgende (vorzugsweise wird keine weitere Bedienaktion wird dazwischen erfasst), weitere Erfassung der vorgegebenen Bedienaktion wird ein Wechsel von dem Untermenüpunkt zu dem Hauptmenüpunkt, dem der Untermenüpunkt zugeordnet ist, ausgelöst.

Betätigt beispielsweise ein Nutzer die "NAV"-Taste mit der Absicht, ein neues Navigationsziel einzugeben, wird möglicherweise automatisch zu dem Menüpunkt "Kartendarstellung" gewechselt, da dieser innerhalb des Navigationsmenüs zuletzt aktiv war. Ein unerfahrener Nutzer wundert sich über dieses Ergebnis und ist unzufrieden. Intuitiv betätigt er die "NAV"-Taste erneut. Dies führt nun zu einem Wechsel zu dem - dem Menüpunkt "Kartendarstellung" übergeordneten - Menüpunkt, insbesondere zu dem Hauptmenüpunkt "Navigation". Der Nutzer kann sich nun innerhalb der Menüstruktur orientieren und innerhalb der Menüstruktur einfach zu dem Untermenüpunkt "Navigationszieleingabe" navigieren. Dies führt zu einer besonders einfachen und intuitiven Bedienung.

Vorzugsweise umfasst die Bedieneinheit eine Vielzahl von Betätigungselementen, wie beispielsweise Drucktaster, Wipptaster, Wippschalter, Sensortasten oder Drehschalter, wobei eine Betätigung eines Betätigungselementes, insbesondere das Drücken einer Taste oder das Kippen einer Wippe in eine bestimmte Richtung, eine Bedienaktion darstellt.

Der Wechsel zu einem Menüpunkt ist vorteilhafterweise mit der Anzeige von Informationen, die diesem Menüpunkt zugeordnet sind, verbunden. Solche Informationen können beispielsweise Symbole, Bezeichnungen oder Beschreibungen des Menüpunktes oder von Menüpunkten, die diesem Menüpunkt untergeordnet sind, umfassen.

Vorzugsweise ist einem Betätigungselement ein Hauptmenüpunkt fest oder vorübergehend zugeordnet, beispielsweise indem das Betätigungselement mit der Bezeichnung des entsprechenden Hauptmenüpunktes beschriftet ist.

Besonders bevorzugt ist vorgesehen, dass durch die Betätigung eines Betätigungselementes, dem ein Hauptmenüpunkt zugeordnet ist, ein Wechsel von einem Menüpunkt zu dem Untermenüpunkt ausgelöst wird, der bei der letzten Navigation innerhalb des Hauptmenüs, das dem Hauptmenüpunkt entspricht, zuletzt ausgewählt oder aktiv war. Es erfolgt also beim Wechsel zu einem Hauptmenü ein automatischer Wechsel zu dem zuletzt gewählten Menüpunkt eines Hauptmenüs. Durch diese Ergänzung der Nutzerabsicht um eine Systemintelligenz können für unerfahrene Nutzer Orientierungsprobleme bei der Navigation innerhalb einer Menüstruktur entstehen. Daher ist in dieser Ausführungsform der Einsatz der Erfindung besonders vorteilhaft.

Im Folgenden wird die Erfindung anhand von Beispielen näher erläutert:
Es wird von einem Kraftfahrzeug mit Navigationssystem ausgegangen. Zur Bedienung bestimmter Fahrzeug-Komponenten, wie das Entertainment-System oder das Navigationssystem, ist eine Bedieneinrichtung vorgesehen.

Die Bedieneinrichtung umfasst neben einem Display eine Bedieneinheit zur Erfassung von Bedienaktionen des Fahrers. Die Bedieneinheit umfasst einen Dreh-Drück-Knopf zur Navigation innerhalb einer hierarchischen Menüstruktur, die eine Vielzahl von Menüpunkten umfasst. Unter anderem sind die Hauptmenüpunkte "Navigation" und "Entertainment" vorgesehen. Zugehörig zu den entsprechenden Hauptmenüs sind hierarchisch unterhalb dieser Hauptmenüpunkte weitere Menüpunkte, insbesondere Untermenüpunkte vorgesehen, die in verschiedene Menüebenen gegliedert sein können. Zudem umfasst die Bedieneinheit für jedes Hauptmenü jeweils eine Taste ("Navigation", "Entertainment", ...), durch deren Betätigung ein Sprung in das entsprechende Hauptmenü erfolgt, und zwar zu dem Menüpunkt, insbesondere Untermenüpunkt, oder zu der Menüebene, insbesondere Untermenüebene, die bei der letzen Auswahl dieses Hauptmenüs zuletzt aktiv oder ausgewählt war. War beispielsweise bei der letzen Auswahl des Hauptmenüs "Navigation" vor der Auswahl des Hauptmenüs "Entertainment" der Untermenüpunkt "Kartendarstellung" zuletzt ausgewählt, so wird - bei ausgewähltem Hauptmenü Entertainment - bei der Betätigung der Taste "Navigation" automatisch in das zuletzt ausgewählte Untermenü "Kartendarstellung" gewechselt.

Gemäß der Erfindung ist eine Prozessoreinrichtung der Bedieneinrichtung nun derart eingerichtet, dass bei erneuter Betätigung der Taste "Navigation" durch den Nutzer ein Wechsel von dem Untermenüpunkt "Kartendarstellung" je nach Ausführungsvariante
- in die Hauptmenüebene, in welcher alle oder mehrere Hauptmenüpunkte angezeigt werden,
- zu dem Hauptmenüpunkt "Navigation" oder
- zu einem anderen Menüpunkt, der dem Untermenüpunkt Kartenddarstellung übergeordnet ist,
erfolgt.

Dadurch gelangt der Nutzer wieder in eine bekannte Menüumgebung und kann sich wieder orientieren. Es ist sehr wahrscheinlich, dass auch unerfahrene Nutzer diese Möglichkeit entdecken. Viele Personen, die nach einer Bedienaktion in ein unerwartetes Menü gelangen, werden dieselbe Bedienaktion einfach noch einmal ausführen, um eine angenommene Falscheingabe oder auch einen angenommenen Systemfehler zu korrigieren. Erfahrene Nutzer können mit der Erfindung mit einer einzigen Bedienaktion beispielsweise auf die oberste Menüebene eines Hauptmenüs wechseln.

## Patentansprüche

1. Bedieneinrichtung
- mit einer Bedieneinheit zur Erfassung von Bedienaktionen,
- mit einer Anzeigeeinrichtung zum Anzeigen von Informationen, die jeweils einem Menüpunkt einer Vielzahl von Menüpunkten einer hierarchischen Menüstruktur zugeordnet sind,
- mit einer Prozessoreinrichtung, die derart eingerichtet und mit der Bedieneinheit und der Anzeigeeinrichtung gekoppelt ist,
- dass durch die Erfassung einer vorgegebenen Bedienaktion ein Wechsel von einem Menüpunkt zu einem anderen Menüpunkt ausgelöst wird, und
- dass durch eine weitere Erfassung der vorgegebenen Bedienaktion ein Wechsel von dem Menüpunkt zu einem dem Menüpunkt in der hierarchischen Menüstruktur übergeordneten Menüpunkt ausgelöst wird.

2. Bedieneinrichtung nach Anspruch 1
- bei dem die hierarchische Menüstruktur eine Vielzahl von Hauptmenüpunkten aufweist, denen jeweils eine Vielzahl von Untermenüpunkten zugeordnet ist,
- bei dem durch die Erfassung einer vorgegebenen Bedienaktion ein Wechsel von einem Menüpunkt zu einem Untermenüpunkt ausgelöst wird, und
- bei dem durch eine weitere Erfassung der vorgegebenen Bedienaktion ein Wechsel von dem Untermenüpunkt zu dem Hauptmenüpunkt, dem der Untermenüpunkt zugeordnet ist, ausgelöst wird.

3. Bedieneinrichtung nach einem der vorhergehenden Ansprüche,
- bei dem die Bedieneinheit eine Vielzahl von Betätigungselementen umfasst, wobei eine Betätigung eines Betätigungselementes eine Bedienaktion darstellt.

4. Bedieneinrichtung nach einem der vorhergehenden Ansprüche,
- bei dem der Wechsel zu einem Menüpunkt mit der Anzeige von Informationen, die diesem Menüpunkt zugeordnet sind, verbunden ist.

5. Bedieneinrichtung nach einem der vorhergehenden Ansprüche,
- bei dem einem Betätigungselement ein Hauptmenüpunkt zugeordnet ist.

6. Bedieneinrichtung nach einem der vorhergehenden Ansprüche,
- bei dem durch die Betätigung eines Betätigungselementes, dem ein Hauptmenüpunkt zugeordnet ist, ein Wechsel von einem Menüpunkt zu dem Untermenüpunkt ausgelöst wird, der bei der letzten Navigation innerhalb des Hauptmenüs, das dem Hauptmenüpunkt entspricht, zuletzt ausgewählt oder aktiv war.

## Claims

1. An operating device
- with an operating unit for detecting operating actions,
- with a display device for displaying items of information, which are in each case assigned to a menu point of a large number of menu points of a hierarchical menu structure,
- with a processor device, which is set up and coupled to the operating unit and the display device in such a way,
- that by detecting a predetermined operating action, a change from one menu point to another menu point is triggered, and
- in that by a further detection of the predetermined operating action, a change from the menu point to a menu point which is superordinate to the menu point in the hierarchical menu structure is triggered.

2. An operating device according to claim 1,
- wherein the hierarchical menu structure has a large number of main menu points, to which a large number of sub-menu points are assigned in each case,
- wherein by detecting a predetermined operating action, a change from one menu point to a sub-menu point is triggered, and
- wherein by a further detection of the predetermined operating action, a change from the sub-menu point to the main menu point, to which the sub-menu point is assigned, is triggered.

3. An operating device according to any one of the preceding claims,
- wherein the operating unit comprises a large number of actuating elements, an actuation of an actuating element being an operating action.

4. An operating device according to any one of the preceding claims,
- wherein the change to a menu point is connected to the display of information assigned to this menu point.

5. An operating device according to any one of the preceding claims,
- wherein an actuating element is assigned a main menu point.

6. An operating device according to any one of the preceding claims,
- wherein by actuating an actuating element, which is assigned a main menu point, a change from a menu point to the sub-menu point is triggered, which was selected last or was active at the last navigation within the main menu, which corresponds to the main menu point.

## Revendications

1. Dispositif d'actionnement comportant :
- une unité d'actionnement pour détecter des actions d'actionnement,
- un dispositif d'affichage pour afficher des informations qui sont respectivement associées à un point de menu parmi une série de points de menu d'une structure de menu hiérarchique,
- un dispositif de calculateur conçu et couplé à l'unité d'actionnement et au dispositif d'affichage,
de sorte que la détection d'une action d'actionnement prédéfinie, déclenche un changement d'un point de menu à un autre point de menu, et
qu'une autre détection de l'action d'actionnement prédéfinie, déclenche un changement du point de menu vers un point de menu supérieur à ce point de menu dans la structure de menu hiérarchique.

2. Dispositif d'actionnement conforme à la revendication 1,
dans lequel la structure de menu hiérarchique comporte une série de points de menu principaux auxquels sont respectivement associés une série de points menu auxiliaire,
la détection d'une action d'actionnement prédéfinie, déclenche un changement d'un point de menu à un point de menu auxiliaire, et
une autre détection de l'action d'actionnement prédéfinie, déclenche un changement du point de sous-menu au point de menu principal auquel est associé le point de menu auxiliaire.

3. Dispositif d'actionnement conforme à l'une des revendications précédentes,
dans lequel l'unité d'actionnement comporte une sérier d'éléments d'actionnement,
l'actionnement d'un élément d'actionnement représentant une action d'actionnement.

4. Dispositif d'actionnement conforme à l'une des revendications précédentes,
dans lequel le changement vers un point de menu est lié à l'affichage d'informations qui sont associées à ce point de menu.

5. Dispositif d'actionnement conforme à l'une des revendications précédentes,
dans lequel à un élément d'actionnement est associé un point de menu principal.

6. Dispositif d'actionnement conforme à l'une des revendications précédentes,
dans lequel, un actionnement d'un élément d'actionnement auquel est associé un point de menu principal, déclenche un changement d'un point de menu à un point de menu auxiliaire qui a été choisi en dernier ou rendu actif au cours de la dernière navigation dans le menu principal qui correspond au point du menu principal.
